# EUROPEAN PATENT SPECIFICATION

(11) **EP 1 550 800 B1**
(45) Date of publication and mention of the grant of the patent: **14.11.2007**
(21) Application number: 05007669.4
(22) Date of filing: 28.03.2001
(51) Int. Cl.: F02B 37/24, F02M 25/07

(54) **Method of controlling an internal combustion engine**
Verfahren zur Steuerung einer Brennkraftmaschine
Procédé de commande d'un moteur à combustion interne

(30) Priority: 31.03.2000 US 540017
(43) Date of publication of application: 06.07.2005
(62) Divisional of application: 01920864.4
(73) Proprietor: DETROIT DIESEL CORPORATION, Detroit, MI 48239-4001 (US)
(72) Inventor: Weisman, Steve Miller II, Deceased (US); Kreso, Admir, Canton Michigan 48188 (US); May, Andrew, Ann Arbor Michigan 48105 (US)
(74) Representative: Grünecker, Kinkeldey, Stockmair & Schwanhäusser Anwaltssozietät

(56) References cited:
- EP-A- 0 843 084
- EP-A- 0 930 423
- US-A- 4 790 286
- PATENT ABSTRACTS OF JAPAN vol. 1998, no. 06, 30 April 1998 (1998-04-30) & JP 10 037786 A (NIPPON SOKEN INC; TOYOTA MOTOR CORP), 10 February 1998 (1998-02-10)

## Description

The present invention relates to a method of controlling an internal combustion engine.

In the control of heavy duty internal combustion engines, the conventional practice utilizes electronic control units having volatile and non-volatile memory, input and output driver circuitry, and a processor that executes instructions to control the engine and its various systems and sub-systems. A particular electronic control unit communicates with numerous sensors, actuators, and other electronic control units to control various functions, which may include various aspects of field delivery, transmission control, and many others.

However, the heavy duty engine business is extremely competitive. Increased demands are being placed on engine manufacturers to design and build engines that provide better engine performance, improved reliability, and greater durability while meeting more stringent emission and noise requirements.

For the foregoing reasons, there is a need for an improved method of controlling an internal combustion engine including an exhaust gas recirculation (EGR) system with improved performance and more precise control than existing systems.

It is, therefore, an objective of the present invention to provide a method of controlling an internal combustion engine with improved performance and more precise emission controls.

The objective is solved according to the present invention by a method of controlling an internal combustion engine having the features of claim 1. Namely, the engine including a variable geometry turbocharger (VGT) driven in response to a VGT command signal, the engine further including a variable flow exhaust gas recirculation (EGR) system driven in response to an EGR command signal to recirculate exhaust to an engine intake mixture, the method comprising determining the EGR command signal based on at least one engine condition; determining a desired oxygen quantity of the intake mixture; estimating an actual oxygen quantity of the intake mixture; determining an engine torque demand; determining an engine speed; determining a feedforward term based on the torque demand and the engine speed; and determining the VGT command signal based on the desired oxygen quantity, the estimated actual oxygen quantity, the EGR command signal, and the feedforward term.

Preferably, the method of controlling an internal combustion engine comprises the further steps of determining a lead compensated signal based on the EGR command signal, and determining the VGT command signal based on the desired oxygen quantity, the estimated actual oxygen quantity, the EGR command signal, the lead compensated signal, and the feedforward term.

In a preferred embodiment, the method further comprises determining an adjusted oxygen quantity error signal based on the desired oxygen quantity, the estimated actual oxygen quantity, and the lead compensated signal; determining the VGT command signal based on the error signal and the feedforward term.

Preferably, determining the VGT command signal further comprises modifying the error signal based on at least one controller gain term. More preferably, the method further comprises determining a gain normalization term; and modifying the error signal based on the gain normalization term.

According to an embodiment, an engine air intake flow is determined, and determining the gain normalization term is based on the air intake flow. Preferably, determining the air intake flow further comprises determining an engine torque demand; determining an engine speed; and determining the engine air intake flow based on the torque demand and the engine speed. More preferably, determining the gain normalization term further comprises determining the gain normalization term such that the term effectively eliminates the error signal for significantly low air intake flow.

Embodiments of the present invention are suitable for compression ignition engines, but some embodiments are suitable for spark ignition engines as well.

Further preferred embodiments of the present invention are laid down in the further subclaims. In the following, the present invention is explained in greater detail by means of several embodiments thereof in conjunction with the accompanying drawings, wherein:
FIGURE 1 is a schematic diagram of an internal combustion engine and engine control system made in accordance with an embodiment.
FIGURE 2 is a block diagram illustrating an EGR and VGT control system of a further embodiment;
FIGURE 3 is a block diagram illustrating an engine control system of still another embodiment;
FIGURE 4 is a block diagram illustrating an engine control system of a further embodiment; and
FIGURE 5 is a graph depicting a gain normalization term versus air flow in a further embodiment.

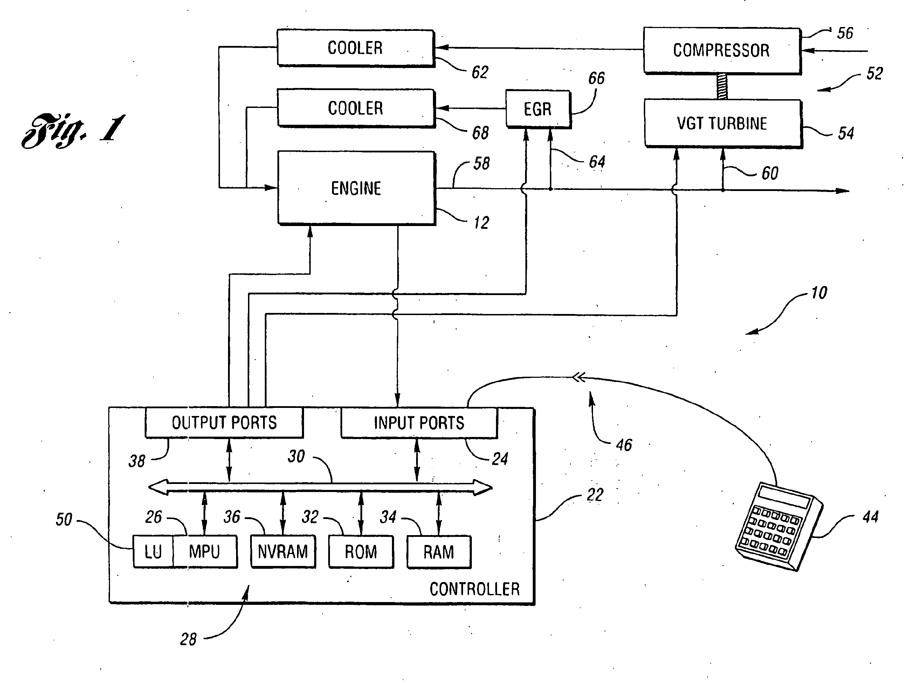

With reference to Figure 1, an internal combustion engine and associated control systems and subsystems are generally indicated at 10. System 10 includes an engine 12 having a plurality of cylinders, each fed by a fuel injector. In a preferred embodiment, engine 12 is a compression-ignition internal combustion engine, such as a heavy duty diesel fuel engine. The injectors receive pressurized fuel from a fuel supply in a known manner.

Various sensors are in electrical communication with a controller 22 via input ports 24. Controller 22 preferably includes a microprocessor 26 in communication with various computer readable storage media 28 via data and control bus 30. Computer readable storage media 28 may include any of a number of known devices which function as read only memory 32, random access memory 34, and non-volatile random access memory 36.

Computer readable storage media 28 have instructions stored thereon that are executable by controller 22 to perform methods of controlling the internal combustion engine, including variable flow exhaust gas recirculation (EGR) valve 66 and variable geometry turbocharger 52. The program instructions direct controller 22 to control the various systems and subsystems of the vehicle, with the instructions being executed by microprocessor 26, and optionally, instructions may also be executed by any number of logic units 50. Input ports 24 receive signals from various sensors, and controller 22 generates signals at output ports 38 that are directed to the various vehicle components.

A data, diagnostics, and programming interface 44 may also be selectively connected to controller 22 via a plug 46 to exchange various information therebetween. Interface 44 may be used to change values within the computer readable storage media 28, such as configuration settings, calibration variables, instructions for EGR and VGT control and others.

In operation, controller 22 receives signals from the various vehicle sensors and executes control logic embedded in hardware and/or software to control the engine. In a preferred embodiment, controller 22 is the DDEC controller available from Detroit Diesel Corporation, Detroit, Michigan. Various other features of this controller are described in detail in a number of different U.S. patents assigned to Detroit Diesel Corporation.

As is appreciated by one of ordinary skill in the art, control logic may be implemented in hardware, firmware, software, or combinations thereof. Further, control logic may be executed by controller 22, in addition to by any of the various systems and subsystems of the vehicle cooperating with controller 22. Further, although in a preferred embodiment, controller 22 includes microprocessor 26, any of a number of known programming and processing techniques or strategy may be used to control an engine in accordance with an embodiment.

Further, it is to be appreciated that the engine controller may receive information in a variety of ways. For example, engine systems information could be received over a data link, at a digital input or at a sensor input of the engine controller.

With continuing reference to Figure 1, controller 22 provides enhanced engine performance by controlling the variable flow exhaust gas recirculation valve 66 and by controlling the variable geometry turbocharger 52. Variable geometry turbocharger 52 includes a turbine 54 and a compressor 56. The pressure of the engine exhaust gasses causes the turbine to spin. The turbine drives the compressor, which is typically mounted on the same shaft. The spinning compressor creates turbo boost pressure which develops increased power during combustion.

A variable geometry turbocharger has moveable components in addition to the rotor group. These moveable components can change the turbocharger geometry by changing the area or areas in the turbine stage through which exhaust gasses from the engine flow, and/or changing the angle at which the exhaust gasses enter or leave the turbine. Depending upon the turbocharger geometry, the turbocharger supplies varying amounts of turbo boost pressure to the engine. The variable geometry turbocharger may be electronically controlled to vary the amount of turbo boost pressure based on various operating conditions.

In a variable geometry turbocharger, the turbine housing is oversized for an engine, and the air flow is choked down to the desired level. There are several designs for the variable geometry turbocharger. In one design, a variable inlet nozzle has a cascade of moveable vanes which are pivotable to change the area and angle at which the air flow enters the turbine wheel. In another design, the turbocharger has a moveable side wall which varies the effective cross-sectional area of the turbine housing. It is appreciated that the described embodiments are not limited to any particular structure for the variable geometry turbocharger.

That is, the term VGT as used herein means any controllable air pressurizing device including the above examples, and including a modulated waste gate valve.

An exhaust gas recirculation system introduces a metered portion of the exhaust gasses into the intake manifold. The EGR system dilutes the incoming fuel charge and lowers combustion temperatures to reduce the level of oxides of nitrogen. The amount of exhaust gas to be recirculated is controlled by EGR valve 66 and VGT. In accordance with the described embodiment, the EGR valve is a variable flow valve that is electronically controlled by controller 22. The geometry of the variable geometry turbocharger is also electronically controlled by controller 22. It is appreciated that there are many possible configurations for a controllable EGR valve, and the described embodiments are not limited to any particular structure for the EGR valve. Further, it is appreciated that various sensors at the EGR valve may detect temperature and differential pressure to allow the engine control to determine the mass flow rate through the valve. In addition, it is appreciated that various different sensor configurations may be utilized in various parts of the exhaust flow paths to allow controller 22 to determine the various mass flow rates throughout the exhaust system, including flow through the EGR system and flow through the compressor, and any other flows.

In some embodiments, it may be desirable to provide a cooler 62 to cool the charge air coming from compressor 56. Similarly, in some embodiments, it may be desirable to provide a cooler 68 to cool the flow through the EGR system prior to reintroduction to engine 12 of the gasses.

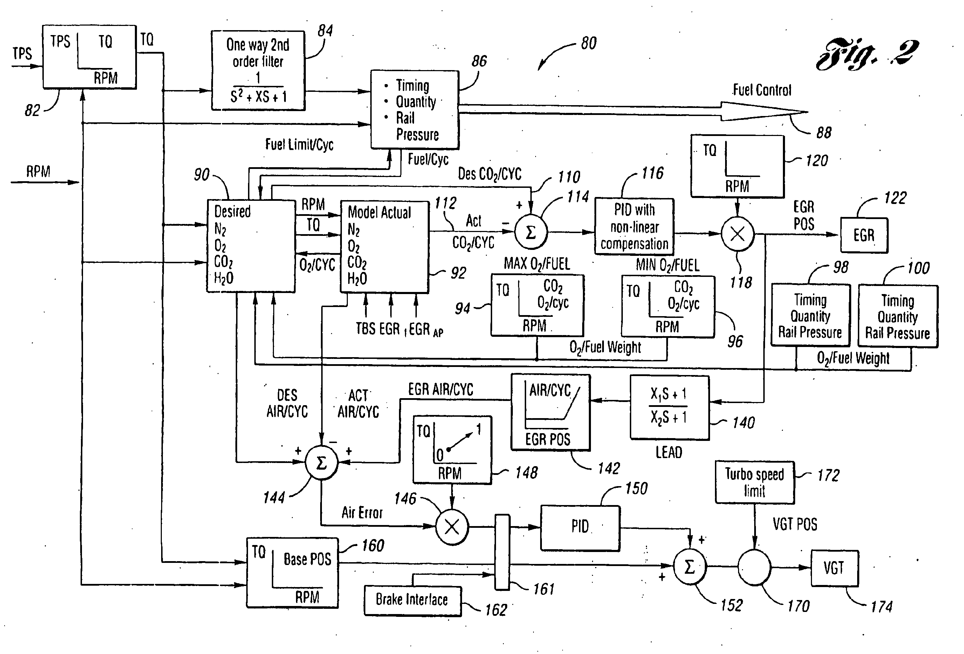

The described embodiments include control logic that processes various inputs representing various engine conditions, and in turn, provides an EGR command signal and a VGT command signal. The EGR command signal commands a position for the variable flow EGR valve 66 to control gas flow through path 64, while the VGT command signal commands a geometry for VGT 52 to control gas flow through path 60. In a described embodiment, the various techniques utilized to determine the EGR and VGT command signals are best shown in Figure 2.

In Figure 2, a block diagram 80 illustrates the functions of the control logic, including instructions, executed by controller 22 to provide enhanced engine performance and improved emission control. The described embodiments are particularly useful to improve emissions on heavy-duty diesel engines. Using EGR technology to mix a portion of exhaust gas with the intake charge reduces emissions of oxides of nitrogen (NOₓ), while minimizing fuel economy impact and improving durability, in accordance with the described embodiments. In a turbo charged diesel engine, the back pressure necessary to drive the EGR flow from exhaust to intake manifolds is accomplished with the variable geometry turbocharger. The control of the EGR flow rate may be achieved via VGT geometry change (for example, vane position change), via EGR valve position change, and preferably via both. In preferred embodiments, the method of control employed results in interactions between EGR and VGT systems that are above the capabilities of existing systems.

There are many described embodiments that may be used separately or together. In the preferred embodiment, the EGR valve and the VGT are controlled simultaneously and continuously. That is, preferred embodiments provide a continuously adjusting EGR/VGT controller. Preferred implementations utilize desired intake manifold composition in terms of chemical species (O₂, N₂, CO₂, and H₂O) as a set point for the controller. The actual quantity of these chemical species is preferably calculated from a simplified combustion model.

With continuing reference to Figure 2, in the embodiment illustrated, a driver accelerator position sensor input and an engine speed (rpm) input are received at block 82. Block 82 utilizes a look up table to determine an engine torque demand. The engine torque demand represents a fuel quantity that may be adjusted for other aspects of engine control that are not specifically described herein such as, for example, cylinder balancing. Further, it is appreciated that Figure 2 illustrates a preferred implementation and that various aspects of the control strategy shown are preferred, but not specifically required. At block 84, a one way, second order filter adds some delay to the torque demand. Delay is added to allow the slower, air flow aspects of engine control to catch up to the faster responding torque demand aspects of engine control. At block 86, engine speed and filtered torque demand are received, and processed along with other engine conditions, resulting in desired fuel injection, timing, quantity, and rail pressure. These factors control fuel delivery, indicated at 88.

At block 90, a desired chemical composition for the engine air intake is determined. The desired composition is in terms of chemical species (N₂, O₂, CO₂, and H₂O). The fuel per cycle is provided to block 90 from injection control block 86, and block 90 provides a fuel limit per cycle to block 86 (for example, fuel may be limited in low air flow conditions). At block 92, actual flow values for the EGR system and turbo charging system, the oxygen to fuel ratio, and chemical composition of the intake gasses are calculated. The calculations are based on a simplified combustion model and engine sensor inputs. The desired or set point values in block 90 are based on interpolation of values contained within five pairs of look up tables. For each pair of look up tables, the first table (94,98) corresponds to stabilized turbocharger boost pressure and the second table (96,100) corresponds to zero turbocharger boost pressure. That is, the first table corresponds to maximum oxygen per fuel (per cycle) while the second table corresponds to minimum oxygen per fuel. Depending on the current oxygen per fuel as determined from various measurements, desired values are interpolated between the two tables for the particular value.

For example, desired carbon dioxide and air values are determined with an interpolation between tables 94,96 (block 94 and block 96 each represent two look up tables, one table for CO; and one table for oxygen quantity/cycle, for a total of four tables). Similarly, desired values for timing parameters, quantity, and rail pressure are determined by interpolation (based on oxygen per fuel) between tables 98 and 100 (block 98 and block 100 each represent three tables). In accordance with described preferred embodiments, controller 22 adjusts VGT and EGR operation to achieve the desired values at block 90 (that are calculated with interpolation) within the respective minimum/maximum tables (96,100 and 94,98, respectively).

From block 90, a desired carbon dioxide quantity 110 is determined. From block 92, an actual carbon dioxide quantity is estimated. It is appreciated that the quantities are preferably represented as mass per cycle. Summer 114 compares the desired carbon dioxide quantity 110 to the actual carbon dioxide quantity 112 to determine the carbon dioxide error signal. EGR valve 122 is controlled by an EGR command signal based on the error signal. Preferably, a controller, such as a proportional/integral/derivative controller 116 (or preferably with a non linear compensation term, for example, a Smith predictor) adjusts the EGR valve position to achieve a desired EGR rate and desired carbon dioxide quantity. Further, in preferred embodiments, EGR loop gain normalization is contained within block 120 to improve transient response by reducing the effects of rapid changes in torque demand.

After loop gain normalization, the resultant EGR command signal is supplied by controller 22 (Figure 1) to EGR valve 122. Preferably, the EGR command signal is also passed to the VGT control, as described below.

In controlling VGT 174, a base geometry (vane position in the preferred implementation), is determined at block 160 based on torque demand and engine speed. The commanded base position is passed from block 160 to block 161. At block 162, a brake interface allows engine braking control logic to override a commanded base position by the normal VGT logic in the event that the engine is being operated as an engine brake. Engine braking uses the engine as a compressor to dissipate lower amounts of energy over a longer amount of time, as opposed to normal vehicle brakes that dissipate a large amount of energy for a shorter amount of time.

The base geometry block 160 serves as a feedforward feature for VGT control to improve transient response and also enable open loop control when desired as described further below.

The EGR command signal is received by lead compensation logic 140 to determine a lead compensated signal based on the EGR command signal. In the described embodiments, this portion of the control loop synchronizes simultaneous EGR valve and VGT geometry control. Particularly, when EGR valve control alone is not sufficient to achieve desired EGR rate, the VGT geometry is modified to increase air flow through the turbine until the desired EGR flow is achieved. The lead term 140 improves transient response to compensate for the turbo boost lag. That is, when EGR valve control is not sufficient to achieve desired carbon dioxide content in the engine intake, increased flow through the turbine increases the overall air flow, but the turbine becomes less efficient, increasing the back pressure that drives carbon dioxide containing exhaust gasses through the recirculation path, resultingly increasing the carbon dioxide mass per cycle at the intake.

At block 142, an additional compensation term based on EGR valve position modifies the lead compensator output. As shown, summer 144 receives a desired air per cycle signal and a actual air per cycle signal to determine an air error. Lead compensator 140 and additional compensator 142 anticipate and exaggerate the air error when it is expected that the EGR valve is opening. The air error determined at block 144 and/or the base geometry (for example vane position) as determined at block 160 are used to determine the VGT command signal.

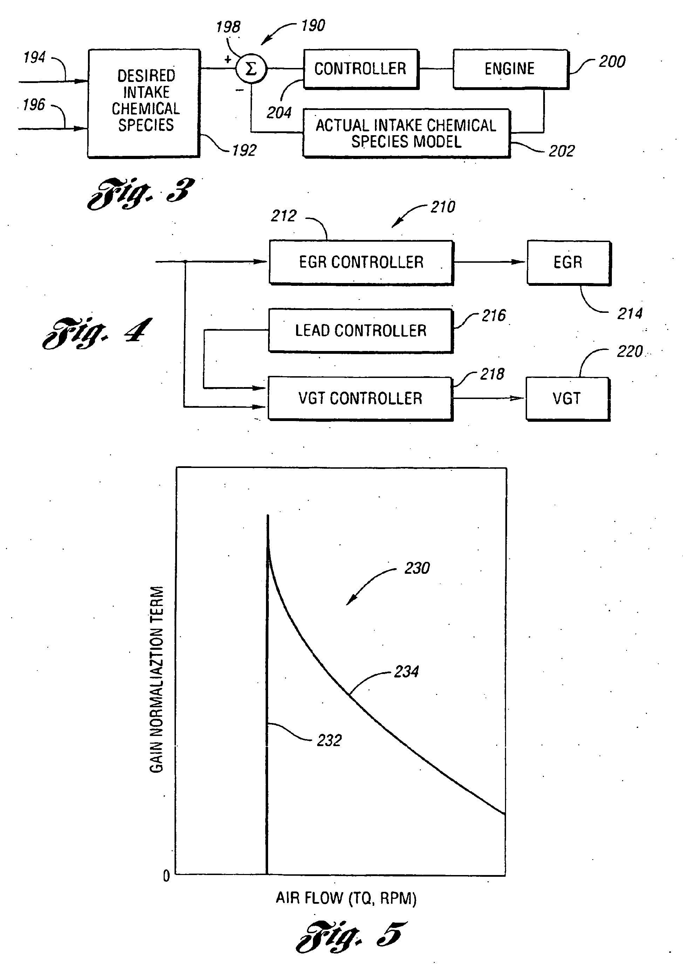

Preferably, at block 148, normalization values contained within block 148 linearize the loop gain of PID controller 150, and serve as a variable switch between open and closed loop control approaches. That is, at low air flow conditions (low engine speed and low torque demand), the normalization factor reduces the air error to zero or to a sufficiently low value so as to be effectively insignificant in controlling VGT 174. That is, at low air flow conditions, normalization effectively eliminates the air error signal leaving the base geometry (the feedforward term) to control the VGT in an open loop fashion. On the other hand, once air flow reaches a sufficient level, the gain normalization factor jumps from zero to a sufficiently great value to control VGT 174 and linearize PID controller 150. As air flow continues to increase, the normalization factor decreases because at higher air flows, PID controller 150 is more effective. An exemplary implementation for normalization block 148 is shown in Figure 5 at 230. As shown, the gain normalization term is zero at low air flows. Air flow is preferably determined as a function of torque demand and engine speed. Once significant air flow exists (reference number 232), the gain normalization term is significantly increased to change from effectively pure open loop control of the VGT with the feedforward term to closed loop control of the VGT (with the feedforward term). As air flow continues to increase, the gain normalization term is reduced as indicated at 234.

As shown by summer 152, the base vane position (or other suitable geometry indicator depending on the implementation) from block 160 provides the general control of the VGT command signal, while the signal derived from the air error provides fine tuning (except at low air flow conditions where the air error portion is effectively ignored and open loop control used). Coming out of the summer 152, limiter 170 limits the VGT command signal as needed to prevent turbo overspeeding. For example, at higher altitudes, continued demands for more oxygen may result in a turbo overspeed. This situation is prevented by turbo speed limit at block 172. After limiting, if necessary, the VGT command signal is applied to VGT 174. As explained above, the EGR command signal is utilized (with lead compensation) to adjust an air error signal to provide fine tuning of the VGT command signal. As such, continuous, simultaneous control of both the EGR and VGT systems allow the effects of these systems on each other to be taken into account during the control strategy. Lead term 140 improves transient response.

Accordingly, the control loop also works in the opposite direction, adjusting the EGR valve position if a desired boost (or air/fuel ratio) is not achieved. That means, at tables 94,96, at lower oxygen per fuel, the value in the minimum CO; table commands a desired carbon dioxide quantity of zero. The upper CO; table is desired CO; quantity at an upper oxygen per fuel ratio. The lower CO; defines a lower oxygen per fuel ratio at which desired CO; is zero. That is, when the engine is already running fuel rich, tables 94 and 96 are interpolated such that desired carbon dioxide quantity is zero. As such, the function used to interpolate between the two carbon dioxide tables may be significantly different than the function used to interpolate between the two air quantity tables. Further, it is appreciated that the interpolation between any two tables is not limited to linear interpolation, but may take other forms.

Advantageously, and as mentioned previously at blocks 86 and 90, the overall air system VGT/EGR controller is directly linked to fuel delivery controller 86. During the normal engine operating conditions, the air system acts to track fuel system requirements to achieve desired engine power. However, during the marginal air/fuel ratio operation, the air system adapts to become the master controller governing maximum fuel delivery to limit excessive smoke and particulate emissions, as indicated by the fuel limit per cycle.

In another embodiment that is not necessarily limited to the control techniques shown in Figure 2, Figure 3 illustrates a feedback control system for an engine based on desired intake chemical species at 190. At block 192, desired intake chemical species is determined based on engine condition inputs 194 and 196 (for example, torque demand and engine speed). Summer 198 compares the desired intake chemical species 192 to the actual intake chemical species as estimated from a model 202. The model includes various engine conditions measured from engine 200. An error between the desired intake chemical species and the actual intake chemical species is passed to controller 204 which controls engine 200 to track the actual intake chemical species according to the species model to the desired intake chemical species which are based on engine conditions. For example, desired relative mass quantity per cycle (and/or actual mass per cycle) may be determined for various chemical species at the engine intake such as N₂, O₂, CO₂, and H₂O. Actual engine intake chemical species composition may be modeled empirically, and errors in composition are determined by summing logic 198. Controller 204 controls the engine to track the actual species composition to the desired. Chemical species feedback techniques may be utilized generally to control the engine in accordance with the embodiments, or in the preferred embodiment illustrated in Figure 2.

In Figure 4, another system is generally indicated at 210. In system 210, an EGR controller 212 determines an EGR command signal that is passed to a variable flow EGR valve 214. The EGR command signal is also passed to the lead compensation block 216. VGT controller 218 receives various engine inputs in addition to an input from compensation block 216. VGT controller 218 determines the VGT command signal based at least in part on the EGR command signal (preferably with lead compensation at block 216) to control VGT 220.

As described above, determining the desired carbon dioxide quantity further comprises determining the desired carbon dioxide quantity based in part on an oxygen to fuel ratio of the intake mixture. Even further, determining the desired carbon dioxide quantity further comprises determining an engine torque demand and determining an engine speed. The desired carbon dioxide quantity is based on the oxygen to fuel ratio of the intake mixture, the torque demand, and the engine speed.

Even further, determining the EGR command signal further comprises determining the EGR command signal further based on at least one controller gain term. More preferably, the EGR command signal is further based on a gain normalization term.

More preferably, determining the VGT command signal further comprises determining a lead compensated signal based on the EGR command signal; and determining the VGT command signal at least partially based on the lead compensated signal.

Moreover, there is provided a computer readable storage medium having instructions stored thereon that are executable by a controller to perform a method of controlling an internal combustion engine, the engine including a variable geometry turbocharger VGT driven in response to a VGT command signal, the engine further including a variable flow exhaust gas recirculation EGR system driven in response to an EGR command signal to recirculate exhaust to an engine intake mixture, wherein the medium further comprises instructions for determining a desired carbon dioxide quantity of the intake mixture; instructions for estimating an actual carbon dioxide quantity of the intake mixture; instructions for comparing the desired carbon dioxide quantity to the actual carbon dioxide quantity to determine an error signal; instructions for determining the EGR command signal based on the error signal; and instructions for determining the VGT command signal based on at least one engine condition and at least partially based on the EGR command signal.

As described above, the instructions for determining the desired carbon dioxide quantity further comprise instructions for determining the desired carbon dioxide quantity based in part on an oxygen to fuel ratio of the intake mixture. Preferably, the instructions for determining the desired carbon dioxide quantity further comprise instructions for determining an engine torque demand; instructions for determining an engine speed; and instructions for determining the desired carbon dioxide quantity based on the oxygen to fuel ratio of the intake mixture, the torque demand, and the engine speed. More preferably, the instructions for determining the EGR command signal further comprise instructions for determining the EGR command signal further based on at least one controller gain term.

Moreover, the instructions for determining the EGR command signal further comprise instructions for determining the EGR command signal further based on a gain normalization term. Preferably, the instructions for determining the VGT command signal further comprise instructions for determining a lead compensated signal based on the EGR command signal; and instructions for determining the VGT command signal at least partially based on the lead compensated signal.

## Claims

1. A method of controlling an internal combustion engine, the engine including a variable geometry turbocharger (VGT) driven in response to a VGT command signal, the engine further including a variable flow exhaust gas recirculation (EGR) system driven in response to an EGR command signal to recirculate exhaust to an engine intake mixture, the method comprising:
determining the EGR command signal based on at least one engine condition;
determining a desired oxygen quantity of the intake mixture;
estimating an actual oxygen quantity of the intake mixture;
determining an engine torque demand;
determining an engine speed;
determining a feedforward term based on the torque demand and the engine speed; and
determining the VGT command signal based on the desired oxygen quantity, the estimated actual oxygen quantity, the EGR command signal, and the feedforward term.

2. Method according to claim 1, wherein the method comprises the steps of:
determining a lead compensated signal based on the EGR command signal; and
determining the VGT command signal based on the desired oxygen quantity, the estimated actual oxygen quantity, the EGR command signal, the lead compensated signal, and the feedforward term.

3. Method according to claim 2, further comprising:
determining an adjusted oxygen quantity error signal based on the desired oxygen quantity, the estimated actual oxygen quantity, and the lead compensated signal;
determining the VGT command signal based on the error signal and the feedforward term.

4. Method according to claim 2 or 3, wherein determining the VGT command signal further comprises:
modifying the error signal based on at least one controller gain term.

5. Method according to claim 2 or 3, further comprising:
determining a gain normalization term; and modifying the error signal based on the gain normalization term.

6. Method according to claim 5, further comprising:
determining an engine air intake flow; and determining the gain normalization term based on the air intake flow.

7. Method according to claim 6, wherein determining the air intake flow further comprises:
determining an engine torque demand;
determining an engine speed; and
determining the engine air intake flow based on the torque demand and the engine speed.

8. Method according to claim 6, wherein determining the gain normalization term further comprises:
determining the gain normalization term such that the term effectively eliminates the error signal for significantly low air intake flow.

## Patentansprüche

1. Verfahren zum Steuern einer Brennkraftmaschine, wobei der Motor einen Turbolader (VGT) mit veränderbarer Geometrie enthält, angetrieben in Abhängigkeit von einem VGT- Befehlssignal, wobei der Motor außerdem ein Abgasrückführungssystem (EGR) mit veränderbarer Abgasströmung enthält, angetrieben in Abhängigkeit von einem EGR- Befehlssignal, um Abgas zu einem Motoreinlassgemisch zurückzuführen, wobei das Verfahren aufweist:
Bestimmen des EGR-Befehlssignales auf der Grundlage von zumindest einem Motorzustand;
Bestimmen einer gewünschten Sauerstoffmenge des Einlassgemisches;
Bestimmen einer tatsächlichen Sauerstoffmenge des Einlassgemisches;
Bestimmen einer Motordrehmomentanforderung;
Bestimmen einer Motordrehzahl;
Bestimmen eines Vorwärtsfolgesteuerungs-Ausdruckes, auf der Grundlage der Drehmomentanforderung und der Motordrehzahl; und
Bestimmen des VGT- Befehlssignales auf der Grundlage der gewünschten Sauerstoffmenge, der abgeschätzten tatsächlichen Sauerstoffmenge, des EGR- Befehlssignales und des Vorwärtsfolgesteurungs-Ausdruckes.

2. Verfahren nach Anspruch 1, wobei das Verfahren die Schritte aufweist von:
Bestimmen eines leitungskomensierten Signales auf der Grundlage des EGR-Befehlssignales; und
Bestimmen des VGT-Befehlssignales auf der Grundlage der gewünschten Sauerstoffmenge, der abgeschätzten tatsächlichen Sauerstoffmenge, des EGR-Befehlssignales, des leitungskompensierten Signales und des Vorwärtsfolgesteuerungs-Ausdruckes.

3. Verfahren nach Anspruch 2, außerdem aufweisend:
Bestimmen eines eingestellten Sauerstoffmenge-Fehlersignales auf der Grundlage der gewünschten Sauerstoffmenge, der abgeschätzten tatsächlichen Sauerstoffmenge und des leitungskompensierten Signales;
Bestimmen des VGT-Befehlssignales auf der Grundlage des Fehlersignales und des Vorwärtsfolgesteuerungs-Ausdruckes.

4. Verfahren nach Anspruch 2 oder 3, wobei das Bestimmen des VGT- Befehlssignales außerdem aufweist:
Modifizieren des Fehlersignales auf der Grundlage zumindest eines Steuerungsgewinn-Ausdruckes.

5. Verfahren nach Anspruch 2 oder 3, mit außerdem:
Bestimmen eines Gewinnnormalisierungs-Ausdruckes und Modifizieren des Fehlersignales auf der Grundlage des Gewinnnormalisierungs-Ausdruckes.

6. Verfahren nach Anspruch 5, mit außerdem:
Bestimmen einer Motoransaugluftströmung und Bestimmen des Gewinn-Normalisierungsausdruckes auf der Grundlage der Ansaugluftströmung.

7. Verfahren nach Anspruch 6, wobei das Bestimmen der Ansaugluftströmung außerdem aufweist:
Bestimmen einer Motordrehmomentanforderung;
Bestimmen einer Motordrehzahl; und
Bestimmen der Motoransaugluftströmung auf der Grundlage der Drehmomentanforderung und der Motordrehzahl.

8. Verfahren nach Anspruch 6, wobei das Bestimmen des Gewinn-Normalisierungsausdruckes außerdem aufweist:
Bestimmen des Gewinn-Normalisierungsausdruckes derart, dass der Ausdruck wirksam das Fehlersignal für eine signifikant niedrige Ansaugluftströmung beseitigt.

## Revendications

1. Procédé de commande d'un moteur à combustion interne, le moteur comprenant un turbocompresseur à géométrie variable (VGT) actionné en réponse à un signal de commande VGT, le moteur comprenant en outre un système de recirculation des gaz d'échappement variable (EGR) actionné en réponse à un signal de commande EGR pour faire recirculer l'échappement vers un mélange d'admission de moteur, le procédé comprenant :
la détermination du signal de commande EGR sur la base d'au moins une condition moteur ;
la détermination d'une quantité d'oxygène souhaitée du mélange d'admission ;
l'estimation d'une quantité d'oxygène réelle du mélange d'admission ;
la détermination d'une demande de couple moteur ;
la détermination d'une vitesse du moteur ;
la détermination d'un terme de régulation prédictive sur la base de la demande de couple et de la vitesse du moteur ; et
la détermination du signal de commande VGT sur la base de la quantité d'oxygène souhaitée, de la quantité d'oxygène réelle estimée, du signal de commande EGR et du terme de régulation prédictive.

2. Procédé selon la revendication 1, dans lequel le procédé comprend les étapes de :
- déterminer un signal compensé de tête sur la base du signal de commande EGR ; et
- déterminer le signal de commande VGT sur la base de la quantité d'oxygène souhaitée, de la quantité d'oxygène réelle estimée, du signal de commande EGR, du signal compensé de tête, et du terme de régulation prédictive.

3. Procédé selon la revendication 2, comprenant en outre :
- la détermination d'un signal d'erreur de quantité d'oxygène ajustée sur la base de la quantité d'oxygène souhaitée, de la quantité d'oxygène réelle estimée, et du signal compensé de tête ;
- la détermination du signal de commande VGT sur la base du signal d'erreur et du terme de régulation prédictive.

4. Procédé selon la revendication 2 ou 3, dans lequel la détermination du signal de commande VGT comprend en outre :
la modification du signal d'erreur sur la base d'au moins un terme de gain de dispositif de commande.

5. Procédé selon la revendication 2 ou 3, comprenant en outre :
la détermination d'un terme de normalisation de gain, et la modification du signal d'erreur sur la base du terme de normalisation de gain.

6. Procédé selon la revendication 5, comprenant en outre :
la détermination d'un débit d'admission d'air de moteur ; et la détermination du terme de normalisation de gain sur la base du débit d'admission d'air.

7. Procédé selon la revendication 6, dans lequel la détermination du débit d'admission d'air comprend en outre :
- la détermination d'une demande de couple moteur ;
- la détermination d'une vitesse du moteur ; et
- la détermination du débit d'admission d'air du moteur sur la base de la demande de couple et de la vitesse du moteur.

8. Procédé selon la revendication 6, dans lequel la détermination du terme de normalisation de gain comprend en outre :
la détermination du terme de normalisation de gain telle que le terme élimine effectivement le signal d'erreur pour réduire significativement le débit d'admission d'air.
